# EUROPEAN PATENT APPLICATION

(11) **EP 0 950 383 A2**
(43) Date of publication of application: **20.10.1999**
(21) Application number: 99104760.6
(22) Date of filing: 10.03.1999
(51) Int. Cl.: A61C 19/00

(54) **Portable photocuring device**

(30) Priority: 14.04.1998 US 59673
(71) Applicant: DENTSPLY DETREY GmbH, D-63303 Dreieich (DE)
(72) Inventor: Blackwell, Gordon Brian, 78465 Konstanz (DE)
(74) Representative: Wächtershäuser, Günter, Prof. Dr.

(57) **Abstract**

The invention provides a hand-held portable photocuring device, comprising an incandescent lamp, and a battery, a housing. The housing has a first cylindrical member and a second cylindrical member. The first cylindrical member has a diameter greater than the second cylindrical member. The first cylindrical member enclosing the battery, and the second cylindrical member encloses the lamp. The incandescent lamp is connected through an electrical conductor to the battery.

## Description

The invention relates to a photocuring device, and particularly relates to a portable photocuring device suitable for dental curing purposes.

### BACKGROUND OF THE INVENTION

A problem with incandescent lamp photocuring devices of the prior art is that they require a high power halogen lamp with a power rating of 75 to 150 watts, operate at more than about 120°C without filter(s) and have the lamp located either inside a remote power source, or inside a hand held curing device. Another problem with incandescent lamp photocuring devices of the prior art is that when the lamp touches mouth tissue of the patient, even for a few seconds, it will burn that tissue. Even holding such a lamp within 1-20mm of mouth tissue for 1 to 5 minutes may burn that tissue. The light from such devices is directed forwards by means of reflector, and passes through a series of filters and lenses to remove unwanted infrared heat radiation, to restrict the bandwidth of the light to the blue region, and to focus and collimate the light. Typically, the wavelength bandwidth is centered around 470-490 nm, and less than 5 percent of the light output extends more than about 50 nm to either side of the center wavelength. After passing through the filters, the light is then directed into the end of a light guide, which may consist of either a solid rod made of a light transmitting material such as quartz, glass, or plastic, or multiple fibers of the same. The light passes along inside the light guide, which is commonly from 10cm to up to 1 meter in length, and eventually emerges from the end where the light is directed onto the material to be cured. Light energy is dissipated and lost each time the light enters or leaves a filter, lens, or light guide. Due to the large energy losses in this conventional design, a powerful, high wattage light source is required. This in turn produces a lot of heat and a fan is therefore required to aid in the removal of this heat. The fan uses energy which further reduces the overall efficiency of the photocuring device.

Photocuring devices have also been suggested which use LED's as the light source. However, LED's are relatively expensive, and have a narrow bandwidth of emitted light which may not correspond with the absorption of the photocuring initiator. Also, electronic circuitry is needed to control the LED's. The use of LED's as a source of light energy therefore still has certain practical difficulties and is mentioned only by way of reference.

It is an object of the invention to provide a hand-held portable photocuring device including an incandescent lamp having a filament and a housing having a first cylindrical member and a second cylindrical member wherein the first cylindrical member has a diameter greater than the second cylindrical member and the second cylindrical member encloses the lamp.

It is an object of the invention to provide a method of providing a hand-held portable photocuring device having a battery, a housing and an incandescent lamp having a filament, wherein the housing encloses the lamp and the battery, and connecting the lamp to the battery whereby the lamp emits less than 20 watts of power, and wherein the device does not include a fan.

### DESCRIPTION OF THE DRAWINGS

Figure 1 is a schematic diagram of a side view of a hand-held portable photocuring device according to the invention.
Figure 2 is a schematic diagram of a side view of another embodiment of a hand-held portable photocuring device according to the invention.

### SUMMARY OF THE INVENTION

The invention provides a hand-held portable photocuring device, comprising an incandescent lamp, a battery, and a housing. The housing has a first cylindrical member and a second cylindrical member. The first cylindrical member has a diameter greater than the second cylindrical member. The first cylindrical member enclosing the battery, and the second cylindrical member encloses the lamp. The incandescent lamp is connected through an electrical conductor to the battery.

The curing device of the invention uses an incandescent filament lamp as a light source of curing device of the invention to provide light energy for photocuring purposes. The light source is positioned to be as close as possible to the material being cured (and preferably within 20mm, more preferably within 5 mm of the material being cured), and the curing device has few or no filters or other sources of energy loss. Because of the low light losses of the device of the present invention, a low power (20 watts or less) filament containing incandescent light source is sufficient to provide curing rates normally achieved only by light sources using approximately five to forty times as much energy. When the lamp of a photocuring device of the invention touches the mouth tissue of a patient for less than 1 minute, the patient is not burned. The power may conveniently be provided by rechargeable cells (batteries), which may be recharged by solar energy if desired.

The invention provides a dental photocuring device using an incandescent lamp as the light source, in which the optical arrangement of the source relative to the material to be cured is to reduce the energy losses, thereby allowing a low power incandescent lamp to be used. The hand held photocuring device of the invention is relatively light, small, simple to construct and cheap to produce.

The hand held photocuring device of the invention has energy requirements which are low enough that they can be met by solar power if required.

### DETAILED DESCRIPTION OF THE INVENTION

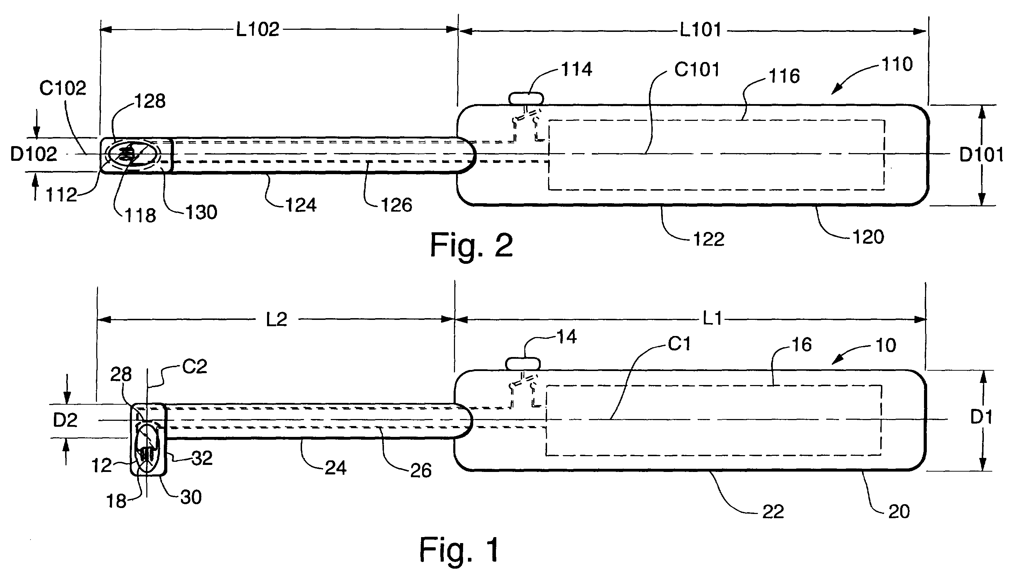

The invention is now described with more particular reference to the FIGURES 1 and 2. With more particular reference to Figure 1 is seen a hand-held portable photocuring device 10 having an incandescent lamp 12, on/off switch 14, and battery 16 with a filament 18 and a housing 20. The housing 20 has a first cylindrical member 22 and a second cylindrical member 24. The first cylindrical member 22 has a diameter greater than the second cylindrical member 24. The second cylindrical member 24 supports the lamp 12.

The incandescent lamp 12 is connected through an electrical conductor 26 to the battery 16. The first cylindrical member encloses the battery.

Reflector 28 is adapted to focus light from the lamp at a position between about 1 cm and 30 cm from filament 18.

Preferably lamp 12 is adapted to emit visible light radiation and the radiation emitted includes less than 50 percent infrared radiation.

Device 10 is used to cure light curable dental material capable of hardening by exposure to visible light emitted from the lamp 12. Preferably the light curable dental material is within 30 cm from lamp 12. Preferably the light curable dental material is supported by a tooth in a patient's mouth.

Lamp has a power consumption in order of increasing preference of less than 20, 16, 15 or 10 watts.

Preferably lamp 12 has a casing and a coating capable of retaining heat energy within the casing, or reflecting the heat energy back onto the filament. Preferably battery 16 is rechargeable. In a preferred embodiment of the invention battery 16 is replaced by a solar cell. The solar cell is connected through electrical conductor 26 to lamp 12.

Preferably lamp 12 is a halogen lamp. Preferably lamp 12 has a transparent cover 30. The cover 30 is positioned adjacent to the lamp 12 and supported by the second cylindrical member 24.

A method of using a hand-held portable photocuring device 10 includes connecting the lamp 12 to the battery 16 whereby the lamp 12 consumes less than 20 watts of power while connected to battery 16 and emitting light. Preferably device 10 does not include a fan. More preferably lamp 12 consumes less than 10 watts of power.

Most preferably lamp 12 consumes less than 5 watts of power. In use lamp 12 is preferably positioned within 5 mm of a patient's mouth tissue. Device 10 is preferably used to cure a photocurable composition supported by a tooth in a patient's mouth.

Device 10 has a central axis C1 which extends along the center line of first cylindrical housing 22 and second cylindrical housing 24. The first cylindrical housing member 22 has a length L1 and a second cylindrical housing member number 24 has a length L2 and diameter D2. Preferably the ratio of the length of the first cylindrical housing member 22 to the length of the second cylindrical housing member 24, (L1 to L2) is greater than 1, and less than 2. Lamp housing 32 has central axis C2. Axis C2 intersects central axis C1 at about 90°.

Preferably the ratio of diameter of the first cylindrical housing 22 to the diameter of second cylindrical housing member 24 (D1 to D2) is greater than 1 and less than 4.

With more particular reference to Figure 2 is seen hand-held portable photocuring device 110 having an incandescent lamp 112, on/off switch 114, and battery 116 with a filament 118 and a housing 120. The housing 120 has a first cylindrical member 122 and a second cylindrical member 124. The first cylindrical member 122 has a diameter greater than the second cylindrical member 124. The second cylindrical member 124 supports the lamp 112.

The incandescent lamp 112 is connected through an electrical conductor 126 to the battery 116. The first cylindrical member encloses the battery.

Reflector 128 is adapted to focus light from the lamp at a position between about 1 cm and 30 cm from filament 118.

Preferably lamp 112 is adapted to emit visible light radiation and the radiation emitted includes less than 50 percent infrared radiation.

Device 110 is used to cure light curable dental material capable of hardening by exposure to visible light emitted from the lamp 112. Preferably the light curable dental material is within 30 cm from lamp 112. Preferably the light curable dental material is supported by a tooth in a patient's mouth. The lamp has a power consumption in order of increasing preference of less than 20, 16, 15 or 10 watts.

Preferably lamp 112 has a casing and a coating capable of retaining heat energy within the casing, or reflecting the heat energy back onto the filament. Preferably battery 116 is rechargeable. In a preferred embodiment of the invention battery 116 is replaced by a solar cell. The solar cell is connected through electrical conductor 126 to lamp 112. Preferably lamp 112 is a halogen lamp. Preferably lamp 112 has a transparent cover 130. The cover 130 is positioned adjacent to the lamp 112 and supported by the second cylindrical member 124.

A method of using a hand-held portable photocuring device 110 includes connecting the lamp 112 to the battery 116 whereby the lamp 112 consumes less than 20 watts of power while connected to battery 116 and emitting light. Preferably device 110 does not include a fan. More preferably lamp 112 consumes less than 10 watts of power.

Most preferably lamp 112 consumes less than 5 watts of power. In use lamp 112 is preferably positioned within 5 mm of a patient's mouth tissue. Device 110 is preferably used to cure a photocurable composition supported by a tooth in a patient's mouth.

Device 110 has a central axis C1 which extends along the center line of first cylindrical housing 122 and second cylindrical housing 124. The first cylindrical housing member 122 has a length L101 and diameter D101 and a second cylindrical housing member 124 has a length L102 and a diameter D102. Preferably the ratio of the length of the first cylindrical housing member 122 to the length of the second cylindrical housing 124, L101 to L102 is greater than 1, and less than 2. Lamp housing 132 has central axis C102. Axis C102 intersects central axis C101 at about 0°.

Preferably the ratio of diameter of the first cylindrical housing 22 to the diameter of second cylindrical housing member 24 (D1 to D2) is greater than 1 and less than 4.

Figure 2 shows an alternative arrangement of a lamp. The removable wand serves to connect the lamp both physically and electrically to the case containing the battery, and to provide a suitable separation from the case to allow its easy access to teeth at the back of the mouth. The wand is preferably made easily removable so that it may be sterilized by suitable means. The wand and lamp are cheap and easily interchangeable, allowing several to be kept at hand if required.

### EXAMPLES

Incandescent lamps with a range of power ratings from approximately 3.4 watts to 20 watts are used to cure a commercially available light curing dental filing material (Spectrum TPH), sold by Dentsply International Inc. in molds 2mm thick. After irradiating the filling material for 40 seconds the degree of cure of the material was judged by measuring the Barcol hardness of the top and bottom surfaces using a Barber-Colman Impressor model GYZJ 934. The results are presented in Table 1, Examples 1 to 6. By way of comparison, the above measurements were also carried out using a commercially available curing lamp (Prismetics Lite II, Dentsply). Results for this lamp are given in Table 1, Comparative Examples 7 and 8. The approximate light output for each lamp in mw/cm² was also measured using a Cure Rite light meter (on sale from DENTSPLY International Inc.), and results are also given in Table 1.

**Table 1**

| Example | lamp wattage | mw/cm² | Barcol hardness | | Max. temperature °C | | |
|---|---|---|---|---|---|---|---|
| | | | top | though 2mm | no filter | IR filter | blue + IR filter |
| 1 | 3.4 | 124 | 70 | 45 | 66 | | |
| 2 | 3.4 | 74 | | | | 45 | |
| 3 | 4.5 | 102 | 70 | 40 | | 45 | |
| 4 | 10 | 170 | 75 | 50 | | 65 | |
| 5 | 10 | 264 | 75 | 65 | 85 | | |
| 6 | 20 | 725 | 75 | 70 | 100 | 75 | |
| 7(Comparative Example using commercial curing lamp) | 75 | 560 | 70 | 70 | | | 55 |
| 8(Comparative Exampel using commercial curing lamp | 75 | | | | >120 | | |

In Comparative Example 8, shown in Table 1, the internal filters were removed from the device for this measurement. The maximum temperature range of the thermistor was reached and the measurement was stopped.

It can be seen from Table 1 that even a lamp having a power as low as 3.4 watts has an adequate output when used in the present invention and produced a hard, cured filling material while a lamp with a power of only 10 watts used in the present invention produced equivalent curing power to the conventional photocuring light using a lamp of 75 watts. Although the heat output of the low wattage lamps is low, an infra red filter is useful in order to keep the heating effect of the lamp to a minimum. Preferably this is present in the form of an integral infrared reflecting coating on the glass or silica bulb of the lamp. This has the effect of reflecting the heat back onto the lamp element, simultaneously reducing heat output and also reducing the energy needed to keep the element hot. This increases the efficiency of the lamp by about thirty percent.

Preferably, the photocuring device includes an incandescent filament containing lamp mounted so that it may be brought close to the material to be cured with a minimum of energy absorbing surfaces between the lamp and the material to be cured. The lamp has a power requirement of less than 20 watts, more preferably less than about 15 watts. Most preferably the lamp has a power requirement of about 3 to 10 watts. Since the lamp is preferably of low power the amount of heat produced is reduced and patient comfort increased compared to prior art dental curing lamps. Filters to absorb the infrared energy are not required. An integral infrared filter coating may be provided on the glass or silica of the lamp. It is not necessary to restrict the wavelength of the emerging light to that of blue light. The lamp of the invention does not require blue filters thereby maximizing the amount of light energy which reaches the material to be cured, and increasing the overall efficiency of energy use. Preferably therefore, the device contains no separate infrared light filters, no visible light filters, and only sufficient packaging around the lamp as is necessary to provide easy cleaning and hygienic use. The incandescent lamp or its housing preferably has a reflector arranged to direct light towards the material to be cured. Power for the photocuring device is preferably supplied via rechargeable cells, and due to the low power requirements the primary source of energy can be solar energy.

It will be apparent to those skilled in the art that various modifications and changes may be made in the practice and use of the present invention without departing from the scope thereof as set forth in the following claims.

## Claims

1. A hand-held portable photocuring device, comprising:
an incandescent lamp having a filament, and
a housing,
said housing having a first cylindrical member and a second cylindrical member, said first cylindrical member having a diameter greater than said second cylindrical member, and said second cylindrical member enclosing said lamp.

2. The device of claim 1 further comprising a battery,
said incandescent lamp being connected through an electrical conductor to said battery, and said first cylindrical member encloses said battery.

3. The device of claim 1 further comprising a reflector, said reflector being adapted to focus light from said lamp at a position between about 1 cm and 30 cm from said filament.

4. The device of claim 1 wherein said lamp is adapted to emit light radiation and said light radiation comprises less than 50 percent infrared radiation.

5. The device of claim 1 in combination with light curable dental material capable of hardening with exposure to visible light emitted from said lamp, said light curable dental material being within 30 cm from said lamp, said light curable dental material being supported by a tooth in a patient's mouth.

6. The device of claim 1 wherein said lamp has a power consumption of less than 16 watts.

7. The device of claim 1 wherein said lamp has a power consumption of less than 10 watts.

8. The device of claim 1 wherein said lamp has a power consumption of less than 15 watts.

9. The device of claim 1 wherein said lamp has a power consumption of less than 20 watts.

10. The device of claim 1 wherein said lamp has a casing and a coating capable of retaining heat energy within said casing, or reflecting the heat energy back onto said filament.

11. The device of claim 2 wherein said battery is rechargeable.

12. The device of claim 1 further comprising a solar cell, said solar cell being connected through an electrical conductor to said lamp.

13. The device of claim 1 wherein said lamp is a halogen lamp.

14. The device of claim 1 further comprising a transparent cover, said cover being positioned adjacent to said lamp and supported by said second cylindrical member.

15. A method of using a hand-held portable photocuring device, comprising:
providing a hand-held portable photocuring device, said device having a battery, a housing and an incandescent lamp having a filament, said lamp comprising a transparent bulb and said housing enclosing said lamp and said battery,
connecting said lamp to said battery whereby said lamp emits less than 20 watts of power, said device not comprising a fan.

16. The method of claim 15 wherein said lamp consumes less than 10 watts of power while emitting light.

17. The method of claim 15 wherein said lamp consumes less than 5 watts of power while emitting light.

18. The method of claim 15 further comprising positioning said lamp within 5 mm of a patient's mouth tissue.

19. The method of claim 15 further comprising a photocurable composition supported by a tooth in a patient's mouth.

20. A method of using a hand-held portable photocuring device, comprising:
providing a hand-held portable photocuring device, said device having a battery, a housing and an incandescent lamp having a filament, said lamp comprising a transparent bulb and said housing enclosing said lamp and said battery,
connecting said lamp to said battery whereby said lamp consumes less than 20 watts of power, said device not comprising a fan
providing a photocurable composition supported by a tooth in a patient's mouth
positioning said lamp within 5 mm of said composition.
